# EUROPEAN PATENT APPLICATION

(11) **EP 2 523 491 A1**
(43) Date of publication of application: **14.11.2012**
(21) Application number: 10841874.0
(22) Date of filing: 08.01.2010
(51) Int. Cl.: H04W 24/00, H04B 17/00

(54) **METHOD AND DEVICE FOR CONTROLLING USER EQUIPMENT TO MEASURE NON-ACTIVATED DOWNLINK COMPONENT CARRIERS**

(71) Applicant: Alcatel Lucent, 75007 Paris (FR)
(72) Inventor: YANG, Tao, Shanghai 201206 (CN); LIM, Seau Sian, Green Westlea Swindon SN5 7DJ (GB)
(74) Representative: 2SPL Patentanwälte
(86) International application number: PCT/CN2010/070068
(87) International publication number: WO 2011/082530

(57) **Abstract**

The invention proposes a method and apparatus for a user equipment to decide by itself to measure an inactive downlink component carrier and a method and apparatus for a base station to control a user equipment to measure an inactive downlink component carrier. The invention further proposes a method and apparatus for a user equipment to request transmission of a sounding reference signal and a method and apparatus for a base station to control a user equipment to transmit a sounding reference signal. Both the user equipment and the base station are located in a wireless communication system based on carrier aggregation. The technical solutions of the invention can achieve a trade-off between low power consumption of the user equipment and the rapid and accurate response to the component carrier.

## Description

### Field of the invention

The present disclosure relates to a wireless communication system and particularly to a wireless communication system based upon a Carrier Aggregation (CA) technology.

### Background of the invention

In LTE-Advanced, Carrier Aggregation has been adopted as an important technology to improve system performance.

At present, a configured Component Carrier (CC) can be in an active status or in an inactive status. Whether the user equipment shall measure the component carrier in the inactive status is an issue under hot discussion. There are currently two solutions to this issue.

In a first solution, the user equipment measures all the component carriers in the inactive status continuously; however since these component carriers in the inactive status may not be activated for a very long period of time to transmit data, this solution may result in big power consumption of the user equipment.

In a second solution, the user equipment does not measure any component carrier in the inactive status, and then the user equipment and the base station does not know the radio condition of these component carriers in the inactive status. When one or more of these component carriers in the inactive status are required to be activated, one approach is that the base station randomly activates one of the component carriers in the inactive status, but if this component carrier has a poor channel condition, then it may be necessary to switch between the component carriers prior to data transmission. Therefore such random activation may result in the extra delay of data transmission and also extra signaling exchange between the user equipment and the base station.

In view of the foregoing problem, it is necessary to provide a method which enables a tradeoff between power consumption of the user equipment and the rapid response to the component carrier.

### Summary of the invention

In view of the foregoing problem in the prior art, there are provided a method and apparatus for controlling a user equipment to measure an inactive downlink component carrier and a method and apparatus for controlling a user equipment to transmit a sounding reference signal in a wireless communication system based on a carrier aggregation technology.

According to a first aspect of the invention, there is provided a method, in a network device of a wireless communication system based on a carrier aggregation technology, of controlling a user equipment to measure an inactive downlink component carrier. The method comprises the step of: a. based upon a trigger condition, controlling the user equipment to open a downlink radio frequency of a target inactive downlink component carrier and to measure the target inactive downlink component carrier.

Optionally when the network device is the user equipment, the step a comprises the steps of: m. based upon the trigger condition, opening the downlink radio frequency of the target inactive downlink component carrier and measuring the target inactive downlink component carrier; and n. transmitting a measurement report to a base station.

Optionally when the network device is a base station, the step a includes the steps of: M. based upon the trigger condition, transmitting a first instruction message to the user equipment, wherein the first instruction message is used for instructing the user equipment to measure the target inactive downlink component carrier; N. receiving a measurement report from the user equipment; and O. activating one or more optimal downlink component carriers in response to the measurement report.

According to a second aspect of the invention, there is provided a method, in a user equipment of a wireless communication system based on a carrier aggregation technology, of assisting a base station in controlling the user equipment to measure an inactive downlink component carrier. The method comprises the steps of: I. receiving a first instruction message from the base station; II. in response to the first instruction message, opening a downlink radio frequency of a target inactive downlink component carrier and measuring the target inactive downlink component carrier; and III. transmitting a measurement report to the base station.

According to a third aspect of the invention, there is provided a method, in a network device of a wireless communication system based on a carrier aggregation technology, of controlling a user equipment to transmit a sounding reference signal. The method comprises the step of: i. based upon a trigger condition, controlling the user equipment to open an uplink radio frequency of a target inactive uplink component carrier and to transmit the sounding reference signal to a base station.

Optionally when the network device is the user equipment, the step i further comprises the steps of: e. based upon the trigger condition, transmitting a seventh instruction message to the base station, wherein the seventh instruction message is used for instructing the base station to activate one or more inactive uplink component carriers; and f. receiving an eighth instruction message from the base station, and in response to the eighth instruction message, opening the uplink radio frequency of the target inactive uplink component carrier and transmitting the sounding reference signal to the base station.

Optionally when the network device is the base station, the step i further comprises the steps of: E. based upon the trigger condition, transmitting a third instruction message to the user equipment, wherein the third instruction message is used for instructing the user equipment to open the uplink radio frequency of the target inactive uplink component carrier and to transmit the sounding reference signal; F. measuring the target inactive uplink component carrier; and G. activating one or more optimal uplink component carriers in response to a measurement report.

According to a fourth aspect of the invention, there is provided a method, in a user equipment of a wireless communication system based on a carrier aggregation technology, of assisting a base station in controlling the user equipment to transmit a sounding reference signal. The method comprises the steps of: A. receiving a third instruction message from the base station; and B. in response to the third instruction message, opening an uplink radio frequency of a target inactive uplink component carrier and transmitting the sounding reference signal to the base station.

According to a fifth aspect of the invention, there is provided a first control apparatus, in a network device of a wireless communication system based upon a carrier aggregation technology, for controlling a user equipment to measure an inactive downlink component carrier, wherein the first control apparatus is configured to control, based upon a trigger condition, the user equipment to open a downlink radio frequency of a target inactive downlink component carrier and to measure the target inactive downlink component carrier, and wherein the network device is a base station or the user equipment.

According to a sixth aspect of the invention, there is provided a second control apparatus, in a network device of a wireless communication system based upon a carrier aggregation technology, for controlling a user equipment to transmit a sounding reference signal, wherein the second control apparatus is configured to control, based upon a trigger condition, the user equipment to open an uplink radio frequency of a target inactive uplink component carrier and to transmit a sounding reference signal to a base station, and wherein the network device is the base station or the user equipment.

With the technical solutions of the invention, a trade-off between power consumption of the user equipment and the rapid and accurate response to the component carrier can be achieved.

### Brief description of drawings

Other objects, features and advantages of the invention will become more apparent from the following description of non-limiting embodiments with reference to the drawings in which:

Fig.1 illustrates a flow chart of a method in which a user equipment decides by itself to measure an inactive downlink component carrier in a wireless communication system based upon a carrier aggregation technology according to an embodiment of the invention;

Fig.2 illustrates a flow chart of a method in which a base station controls a user equipment to measure an inactive downlink component carrier in a wireless communication system based upon a carrier aggregation technology according to an embodiment of the invention;

Fig.3 illustrates a flow chart of a method in which a user equipment decides by itself to measure an inactive downlink component carrier and to request transmission of a sounding reference signal in a wireless communication system based upon a carrier aggregation technology according to an embodiment of the invention;

Fig.4 illustrates a flow chart of a method in which a base station controls a user equipment to measure an inactive downlink component carrier and controls the user equipment to transmit a sounding reference signal in a wireless communication system based upon a carrier aggregation technology according to another embodiment of the invention;

Fig.5 illustrates a flow chart of a method in which a user equipment requests transmission of a sounding reference signal in a wireless communication system based upon a carrier aggregation technology according to an embodiment of the invention;

Fig.6 illustrates a flow chart of a method in which a base station controls a user equipment to transmit a sounding reference signal in a wireless communication system based upon a carrier aggregation technology according to another embodiment of the invention;

Fig.7 illustrates a flow chart of a method in which a user equipment requests transmission of a sounding reference signal and decides by itself to measure an inactive downlink component carrier in a wireless communication system based upon a carrier aggregation technology according to an embodiment of the invention; and

Fig.8 illustrates a flow chart of a method in which a base station controls a user equipment to transmit a sounding reference signal and controls the user equipment to measure an inactive downlink component carrier in a wireless communication system based upon a carrier aggregation technology according to another embodiment of the invention.

Throughout the drawings, identical or similar reference numerals designate identical or similar step features/devices (modules).

### Detailed description of embodiments

The technical solutions of the invention will be described below with reference to the drawings.

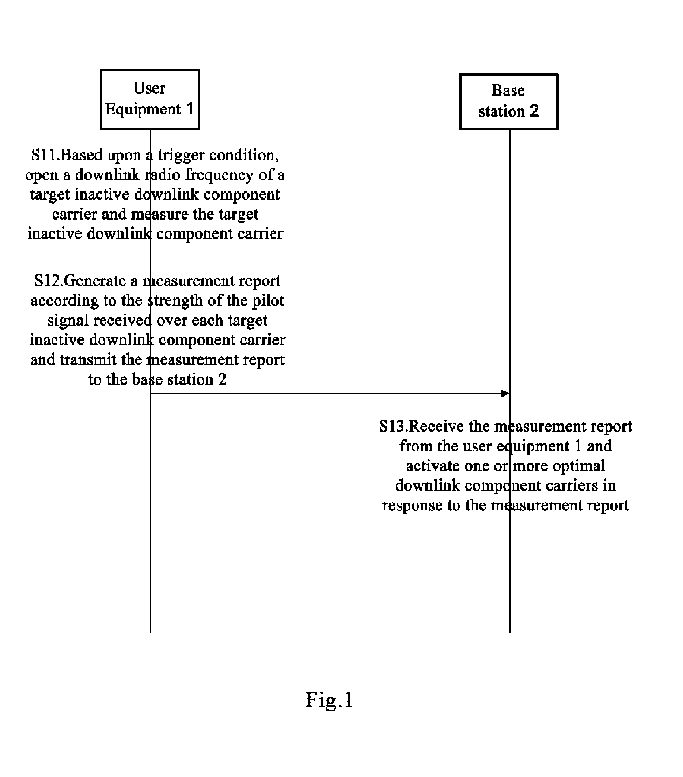

Fig.1 illustrates a flow chart of a method in which a user equipment decides by itself to measure an inactive downlink component carrier in a wireless communication system based upon a carrier aggregation technology according to an embodiment of the invention.

Firstly in Step S11, based upon a trigger condition, the user equipment 1 opens a downlink radio frequency of a target inactive downlink component carrier and measures the target inactive downlink component carrier.

It shall be noted that the target inactive downlink component carrier may be one or more configured downlink component carriers in an inactive status.

Optionally the trigger condition is a poor radio condition of a downlink component carrier currently in an active status as measured by the user equipment 1, for example, the Channel Quality Indicator (CQI) of the one or more downlink component carriers in an active status is below a predetermined threshold in a predetermined period of time.

Hereupon the user equipment 1 deems that it is necessary to activate one or more downlink component carriers in an inactive status for transmission of downlink data. Then the user equipment 1 opens the downlink radio frequency of the target inactive downlink component carrier and measures the target inactive downlink component carrier.

Since the base station 2 transmits the pilot signal for each configured downlink component carrier, the user equipment 1 can receive the pilot signal transmitted from the base station 2 over the target inactive downlink component carrier once the user equipment 1 opens the downlink radio frequency of the inactive downlink component carrier.

Then in Step S12, the user equipment 1 generates a measurement report according to the strength of the pilot signal received over each target inactive downlink component carrier and transmits the measurement report to the base station 2.

Optionally the measurement report can include radio conditions of all the downlink component carriers currently in an active status and a radio condition of each target inactive downlink component carrier.

Next in Step S13, the base station 2 receives the measurement report from the user equipment 1 and activates one or more optimal downlink component carriers in response to the measurement report.

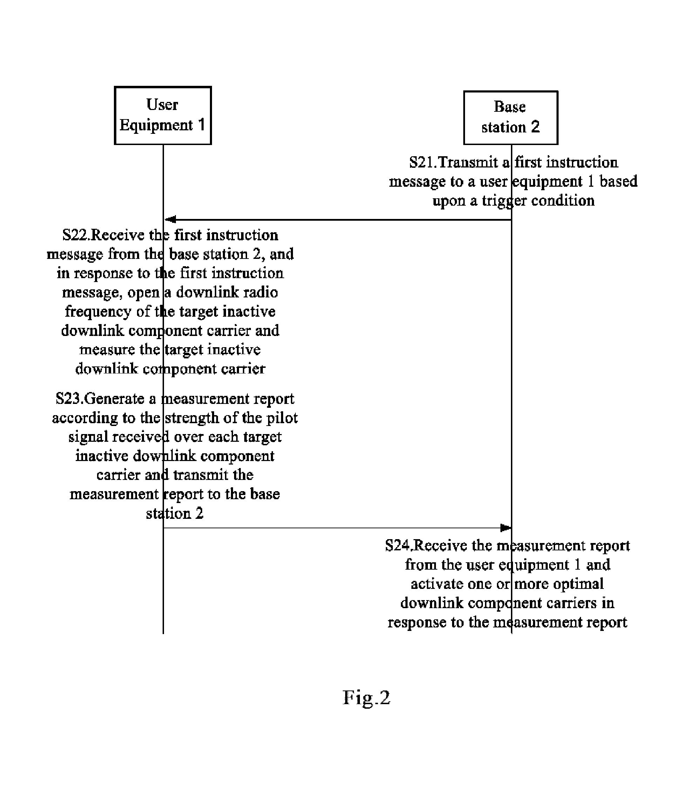

Fig.2 illustrates a flow chart of a method in which a base station controls a user equipment to measure an inactive downlink component carrier in a wireless communication system based upon a carrier aggregation technology according to an embodiment of the invention.

Firstly in Step S21, the base station 2 transmits a first instruction message to the user equipment 1 based upon a trigger condition. The first instruction message is used for instructing the user equipment 1 to measure a target inactive downlink component carrier.

It shall be noted that the target inactive downlink component carrier may be one or more configured downlink component carriers in an inactive status.

Optionally the trigger condition includes any one or more of:

- the downlink buffer data exceeding a predetermined threshold;

- the downlink component carrier currently in an active status is in an overload status; and

- the radio condition of the downlink component carrier currently in an active status is poor.

When one or more of the foregoing trigger conditions are satisfied, the base station 2 deems that it is necessary to activate one or more downlink component carriers in an inactive status for transmission of downlink data. Then the base station 2 transmits the first instruction message to the user equipment 1 to instruct the user equipment 1 to measure the target inactive downlink component carrier.

Then in Step S22, the user equipment 1 receives the first instruction message from the base station 2, and in response to the first instruction message, opens the downlink radio frequency of the target inactive downlink component carrier and measures the target inactive downlink component carrier.

Since the base station 2 transmits the pilot signal for each configured downlink component carrier, the user equipment 1 can receive the pilot signal transmitted from the base station 2 over the target inactive downlink component carrier once the user equipment 1 opens the downlink radio frequency of the inactive downlink component carrier.

Then in Step S23, the user equipment 1 generates a measurement report according to the strength of the pilot signal received over each target inactive downlink component carrier and transmits the measurement report to the base station 2.

Optionally the measurement report can include radio conditions of all the downlink component carriers currently in an active status and a radio condition of each target inactive downlink component carrier.

Next in Step S24, the base station 2 receives the measurement report from the user equipment 1 and activates one or more optimal downlink component carriers in response to the measurement report.

In the two embodiments illustrated in Fig.1 and Fig.2 respectively, the user equipment 1 decides by itself to measures the target inactive downlink component carrier, and the base station 2 controls the user equipment 1 to measure the target inactive downlink component carrier. Those ordinarily skilled in the art can appreciate that the foregoing two solutions can be used in combination in a specific application.

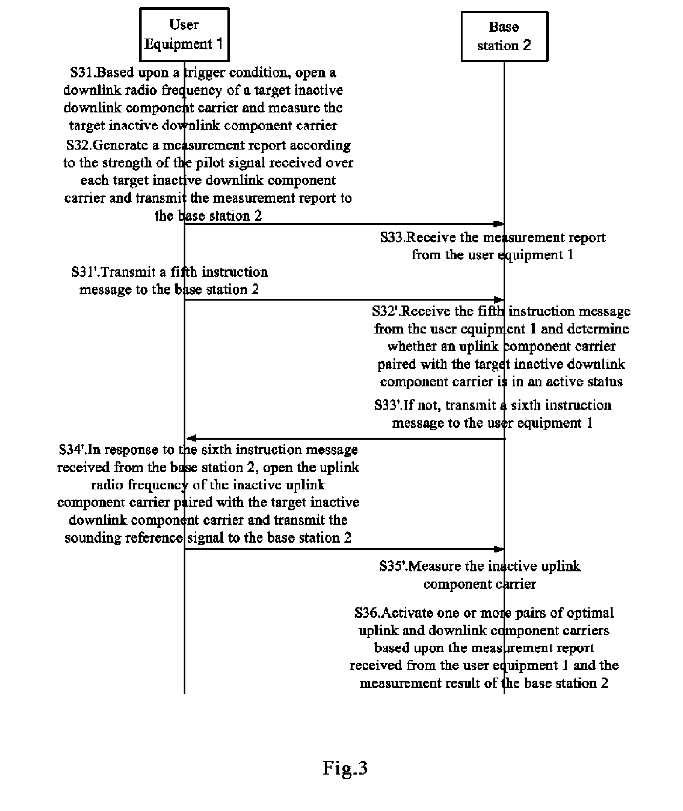

Fig.3 illustrates a flow chart of a method in which a user equipment decides by itself to measure an inactive downlink component carrier and to request transmission of a sounding reference signal to a base station in a wireless communication system based upon a carrier aggregation technology according to an embodiment of the invention.

Firstly in Step S31, based upon a trigger condition, the user equipment 1 opens a downlink radio frequency of a target inactive downlink component carrier and measures the target inactive downlink component carrier.

It shall be noted that the target inactive downlink component carrier may be one or more configured downlink component carriers in an inactive status.

Optionally the trigger condition is a poor radio condition of a downlink component carrier currently in an active status as measured by the user equipment 1, for example, a Channel Quality Indicator (CQI) of the one or more downlink component carriers in an active status is below a predetermined threshold in a predetermined period of time.

Hereupon the user equipment 1 deems that it is necessary to activate one or more downlink component carriers in an inactive status for transmission of downlink data. Then the user equipment 1 opens the downlink radio frequency of the target inactive downlink component carrier and measures the target inactive downlink component carrier.

Since the base station 2 transmits the pilot signal for each configured downlink component carrier, the user equipment 1 can receive the pilot signal transmitted from the base station 2 over the target inactive downlink component carrier once the user equipment 1 opens the downlink radio frequency of the inactive downlink component carrier.

Then in Step S32, the user equipment 1 generates a measurement report according to the strength of the pilot signal received over each target inactive downlink component carrier and transmits the measurement report to the base station 2.

Next in Step S33, the base station 2 receives the measurement report from the user equipment 1.

Optionally the measurement report can include radio conditions of all the downlink component carriers currently in an active status and a radio condition of each target inactive downlink component carrier.

Concurrently in Step S31', the user equipment 1 transmits a fifth instruction message to the base station 2 to instruct the base station 2 activate one or more target inactive downlink component carriers.

Then in Step S32', the base station 2 receives the fifth instruction message from the user equipment 1 and determines whether an uplink component carrier paired with the target inactive downlink component carrier is in an active status.

If the uplink component carrier paired with the target inactive downlink component carrier is in an inactive status, then the base station 2 transmits a sixth instruction message to the user equipment 1 in Step S33'. The sixth instruction message is used for instructing the user equipment 1 to open an uplink radio frequency of the inactive uplink component carrier paired with the target inactive downlink component carrier and to transmit a sounding reference signal.

Next in Step S34', in response to the sixth instruction message received from the base station 2, the user equipment 1 opens the uplink radio frequency of the inactive uplink component carrier paired with the target inactive downlink component carrier and transmits the Sounding Reference Signal (SRS) to the base station 2.

Thereafter in Step S35', the base station 2 measures the inactive uplink component carrier.

Optionally the base station 2 measures the strength of the sounding reference signal transmitted over the inactive uplink component carrier to generate a measurement result.

Finally in Step S36, the base station 2 activates one or more pairs of optimal uplink and downlink component carriers based upon the measurement report received from the user equipment 1 and the measurement result of the present base station 2.

It shall be noted that Steps S31-S33 and Steps S31'-S35' may not be performed in a specific sequential order.

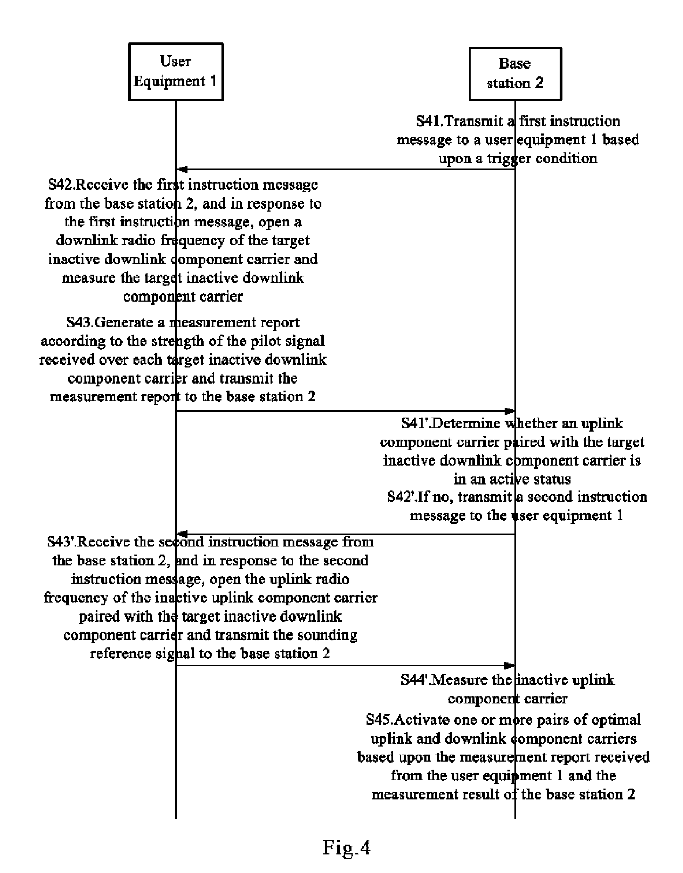

Fig.4 illustrates a flow chart of a method in which a base station controls a user equipment to measure an inactive downlink component carrier and controls the user equipment to transmit a sounding reference signal in a wireless communication system based upon a carrier aggregation technology according to another embodiment of the invention.

Firstly in Step S41, the base station 2 transmits a first instruction message to the user equipment 1 based upon a trigger condition, wherein the first instruction message is used for instructing the user equipment 1 to measure a target inactive downlink component carrier.

It shall be noted that the target inactive downlink component carrier may be one or more configured downlink component carriers in an inactive status.

Optionally the trigger condition includes any one or more of:

- the downlink buffer data exceeds a predetermined threshold;

- the downlink component carrier currently in an active status is in an overload status; and

- the radio condition of the downlink component carrier currently in an active status is poor.

When one or more of the foregoing trigger conditions are satisfied, the base station 2 deems that it is necessary to activate one or more downlink component carriers in an inactive status for transmission of downlink data. Then the base station 2 transmits the first instruction message to the user equipment 1 to instruct the user equipment 1 to measure the target inactive downlink component carrier.

Then in Step S42, the user equipment 1 receives the first instruction message from the base station 2, and in response to the first instruction message, opens the downlink radio frequency of the target inactive downlink component carrier and measures the target inactive downlink component carrier.

Since the base station 2 transmits the pilot signal for each configured downlink component carrier, the user equipment 1 can receive the pilot signal transmitted from the base station 2 over the target inactive downlink component carrier once the user equipment 1 opens the downlink radio frequency of the inactive downlink component carrier.

Then in Step S43, the user equipment 1 generates a measurement report according to the strength of the pilot signal received over each target inactive downlink component carrier and transmits the measurement report to the base station 2.

Optionally the measurement report can include radio conditions of all the downlink component carriers currently in an active status and a radio condition of each target inactive downlink component carrier.

Concurrently in Step S41', the base station 2 determines whether an uplink component carrier paired with the target inactive downlink component carrier is in an active status.

If the uplink component carrier paired with the target inactive downlink component carrier is in an inactive status, then the base station 2 transmits a second instruction message to the user equipment 1 in Step S42'. The second instruction message is used for instructing the user equipment 1 to open an uplink radio frequency of the inactive uplink component carrier paired with the target inactive downlink component carrier and to transmit a sounding reference signal.

Next in Step S43', the user equipment 1 receives the second instruction message from the base station 2, and in response to the second instruction message, opens the uplink radio frequency of the inactive uplink component carrier paired with the target inactive downlink component carrier and transmits the sounding reference signal to the base station 2.

Next in Step S44', the base station 2 measures the inactive uplink component carrier.

Optionally the base station 2 measures the strength of the sounding reference signal transmitted over the inactive uplink component carrier to generate a measurement result.

Finally in Step S45, the base station 2 activates one or more pairs of optimal uplink and downlink component carriers based upon the received measurement report from the user equipment 1 and the measurement result of the base station 2.

It shall be noted that Steps S41-S43 and Steps S41'-S44' may not be performed in a specific sequential order.

In the embodiment illustrated in Fig.3, the user equipment 1 decides by itself to measure the target inactive downlink component carrier and also to request transmission of the sounding reference signal to the base station 2, and in the embodiment illustrated in Fig.4, the base station 2 controls the user equipment 1 to measure the target inactive downlink component carrier and also controls the user equipment 1 to transmit the sounding reference signal. Those ordinarily skilled in the art can appreciate that the foregoing two solutions can be used in combination in a specific application.

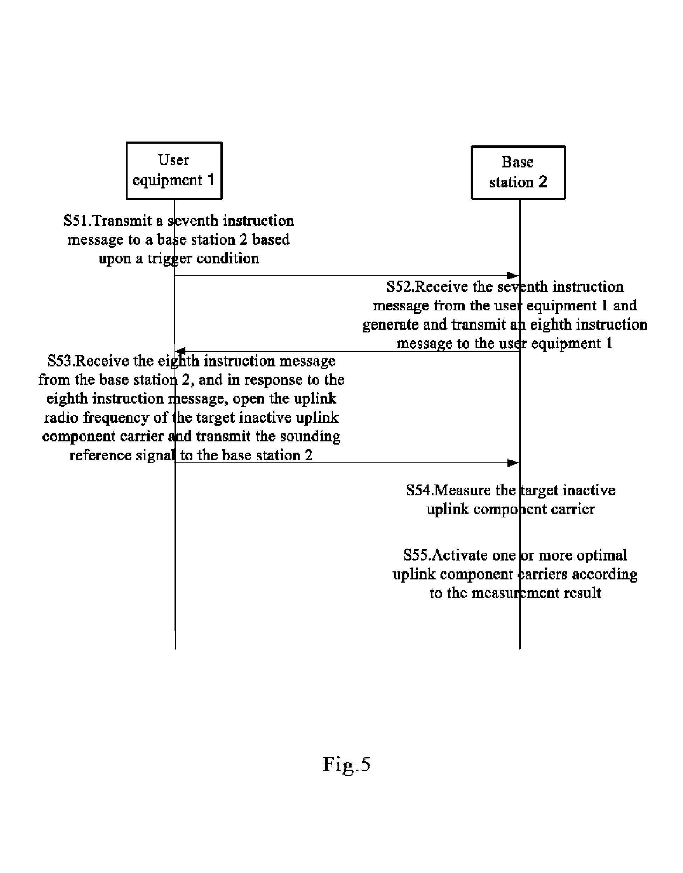

Fig.5 illustrates a flow chart of a method in which a user equipment requests transmission of a sounding reference signal in a wireless communication system based upon a carrier aggregation technology according to an embodiment of the invention.

Firstly in Step S51, the user equipment 1 transmits a seventh instruction message to the base station 2 based upon a trigger condition. The seventh instruction message is used for instructing the base station 2 to activate one or more uplink component carriers in an inactive status for transmission of uplink data.

Optionally the trigger condition is that the uplink buffer data of the user equipment 1 exceeds a predetermined threshold.

Optionally the seventh instruction message includes an uplink buffer data report or other explicit or implicit signaling of the user equipment 1.

Next in Step S52, the base station 2 receives the seventh instruction message from the user equipment 1 and generates an eighth instruction message and transmits it to the user equipment 1. The eighth instruction message is used for instructing the user equipment 1 to open an uplink radio frequency of a target inactive uplink component carrier and to transmit a sounding reference signal.

It shall be noted that the target inactive uplink component carrier may be one or more configured uplink component carriers in an inactive status.

Then in Step S53, the user equipment 1 receives the eighth instruction message from the base station 2, and in response to the eighth instruction message, opens the uplink radio frequency of the target inactive uplink component carrier and transmits the sounding reference signal to the base station 2.

Next in Step S54, the base station 2 measures the target inactive uplink component carrier.

Optionally the base station 2 measures the strength of the sounding reference signal transmitted over the target inactive uplink component carrier to generate a measurement result.

Finally in Step S55, the base station 2 activates one or more optimal uplink component carriers according to the measurement result.

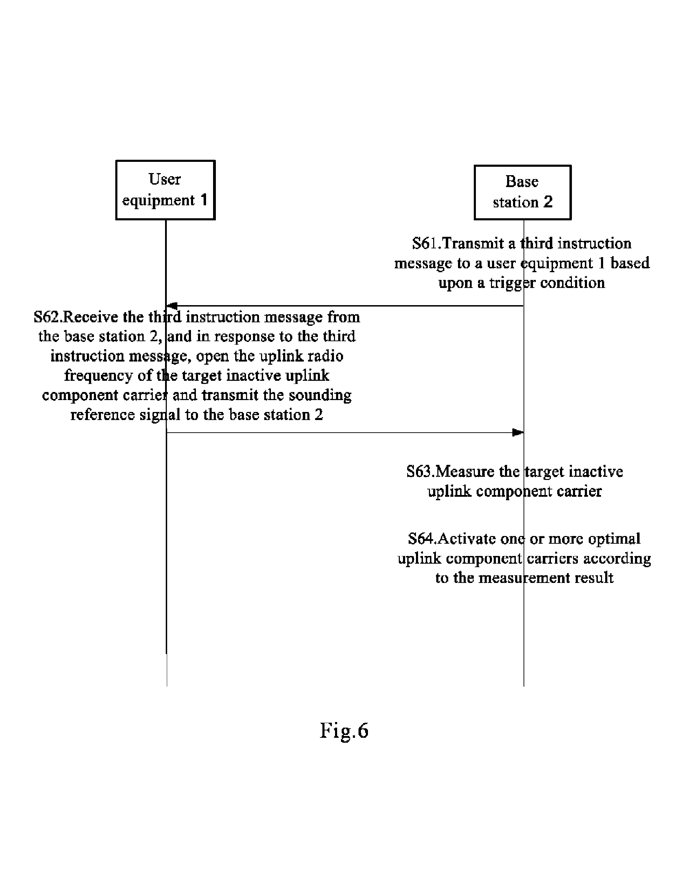

Fig.6 illustrates a flow chart of a method in which a base station controls a user equipment to transmit a sounding reference signal in a wireless communication system based upon a carrier aggregation technology according to another embodiment of the invention.

Firstly in Step S61, the base station 2 transmits a third instruction message to the user equipment 1 based upon a trigger condition. The third instruction message is used for instructing the user equipment 1 to open an uplink radio frequency of a target inactive uplink component carrier and to transmit a sounding reference signal.

It shall be noted that the target inactive uplink component carrier may be one or more configured uplink component carriers in an inactive status.

Optionally the trigger condition includes any one or more of:

- the uplink buffer data reported from the user equipment 1 exceeds a predetermined threshold;

- the uplink component carrier currently in an active status is in an overload status; and

- the radio condition of the uplink component carrier currently in an active status is poor.

When one or more of the foregoing trigger conditions are satisfied, the base station 2 deems that it is necessary to activate one or more uplink component carriers in an inactive status for transmission of uplink data. Then the base station 2 transmits the third instruction message to the user equipment 1 to instruct the user equipment 1 to open the uplink radio frequency of the target inactive uplink component carrier and to transmit the sounding reference signal.

Next in Step S62, the user equipment 1 receives the third instruction message from the base station 2, and in response to the third instruction message, opens the uplink radio frequency of the target inactive uplink component carrier and transmits the sounding reference signal to the base station 2.

Then in Step S63, the base station 2 measures the target inactive uplink component carrier.

Optionally the base station 2 measures the strength of the sounding reference signal transmitted over the target inactive uplink component carrier to generate a measurement result.

Finally in Step S64, the base station 2 activates one or more optimal uplink component carriers according to the measurement result.

In the two embodiments illustrated in Fig.5 and Fig.6 respectively, the user equipment 1 requests by itself the base station 2 to transmit the sounding reference signal, and the base station 2 controls the user equipment 1 to transmit the sounding reference signal. Those ordinarily skilled in the art can appreciate that the foregoing two solutions can be used in combination in a specific application.

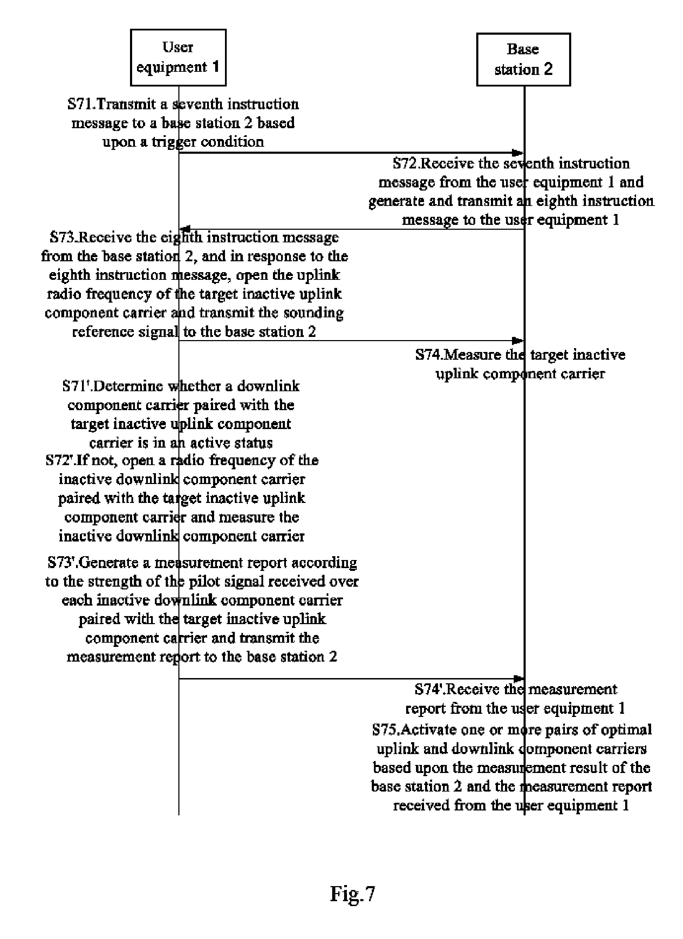

Fig.7 illustrates a flow chart of a method in which a user equipment requests transmission of a sounding reference signal and decides by itself to measure an inactive downlink component carrier in a wireless communication system based upon a carrier aggregation technology according to an embodiment of the invention.

Firstly in Step S71, the user equipment 1 transmits a seventh instruction message to the base station 2 based upon a trigger condition. The seventh instruction message is used for instructing the base station 2 to activate one or more uplink component carriers in an inactive status for transmission of uplink data.

Optionally the trigger condition is that the uplink buffer data of the user equipment 1 exceeds a predetermined threshold.

Optionally the seventh instruction message includes the uplink buffer data report or other explicit or implicit signaling of the user equipment 1.

Next in Step S72, the base station 2 receives the seventh instruction message from the user equipment 1 and generates an eighth instruction message and transmits it to the user equipment 1. The eighth instruction message is used for instructing the user equipment 1 to open an uplink radio frequency of a target inactive uplink component carrier and to transmit a sounding reference signal.

It shall be noted that the target inactive uplink component carrier may be one or more configured uplink component carriers in an inactive status.

Then in Step S73, the user equipment 1 receives the eighth instruction message from the base station 2, and in response to the eighth instruction message, opens the uplink radio frequency of the target inactive uplink component carrier and transmits the sounding reference signal to the base station 2.

Next in Step S74, the base station 2 measures the target inactive uplink component carrier.

Optionally the base station 2 measures the strength of the sounding reference signal transmitted over the target inactive uplink component carrier to generate a measurement result.

Concurrently in Step S71', the user equipment 1 determines whether a downlink component carrier paired with the target inactive uplink component carrier is in an active status.

If the downlink component carrier paired with the target inactive uplink component carrier is in an inactive status, then in the step S72', the user equipment 1 opens the radio frequency of the inactive downlink component carrier paired with the target inactive uplink component carrier and measures the inactive downlink component carrier.

Since the base station 2 transmits the pilot signal for each configured downlink component carrier, the user equipment 1 can receive the pilot signal transmitted from the base station 2 over an inactive downlink component carrier paired with the target inactive uplink component carrier once the user equipment 1 opens the radio frequency of the inactive downlink component carrier.

Then in Step S73', the user equipment 1 generates a measurement report according to the strength of the pilot signal received over each inactive downlink component carrier paired with the target inactive uplink component carrier and transmits the measurement report to the base station 2.

Optionally the measurement report can include radio conditions of all the downlink component carriers currently in an active status and a radio condition of each inactive downlink component carrier paired with the target inactive uplink component carrier.

Next in Step S74', the base station 2 receives the measurement report from the user equipment 1.

Finally in Step S75, the base 2 activates one or more pairs of optimal uplink and downlink component carriers based upon the measurement result of the base station 2 and the measurement report received from the user equipment 1.

It shall be noted that Steps S71-S74 and Steps S71'-S74' may not be performed in a specific sequential order.

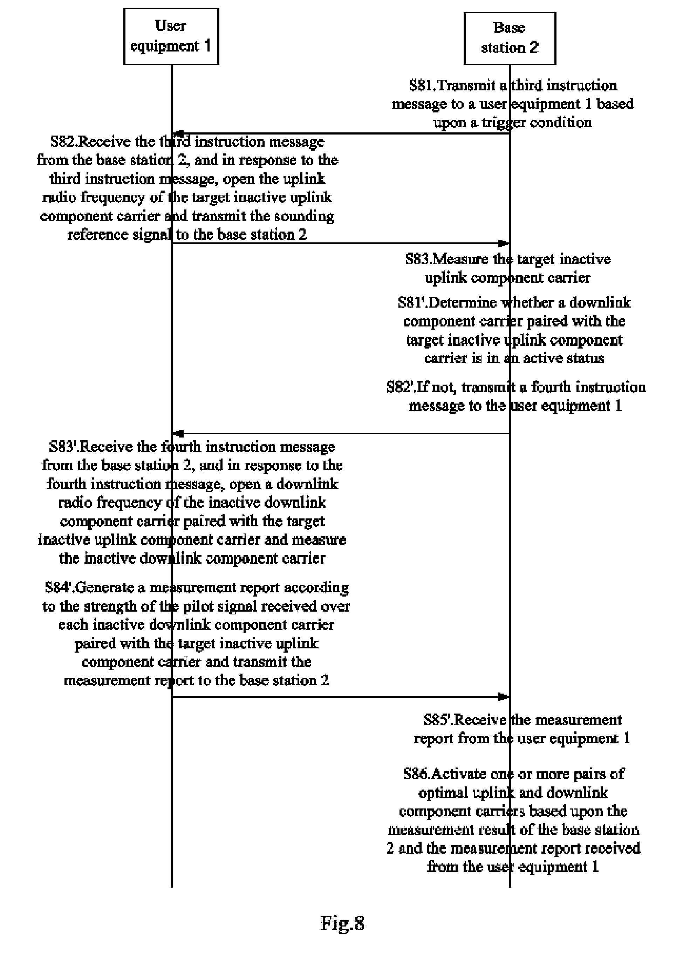

Fig.8 illustrates a flow chart of a method in which a base station controls a user equipment to transmit a sounding reference signal and controls the user equipment to measure an inactive downlink component carrier in a wireless communication system based upon a carrier aggregation technology according to another embodiment of the invention.

Firstly in Step S81, the base station 2 transmits a third instruction message to the user equipment 1 based upon a trigger condition. The third instruction message is used for instructing the user equipment 1 to open an uplink radio frequency of a target inactive uplink component carrier and to transmit a sounding reference signal.

It shall be noted that the target inactive uplink component carrier may be one or more configured uplink component carriers in an inactive status.

Optionally the trigger condition includes any one or more of:

- the uplink buffer data reported from the user equipment 1 exceeds a predetermined threshold;

- the uplink component carrier currently in an active status is in an overload status; and

- the radio condition of the uplink component carrier currently in an active status is poor.

When one or more of the foregoing trigger conditions are satisfied, the base station 2 deems that it is necessary to activate one or more uplink component carriers in an inactive status for the user equipment 1 to transmit uplink data. Then the base station 2 transmits a third instruction message to the user equipment 1 to instruct the user equipment 1 to open the uplink radio frequency of the target inactive uplink component carrier and to transmit the sounding reference signal.

Next in Step S82, the user equipment 1 receives the third instruction message from the base station 2, and in response to the third instruction message, opens the uplink radio frequency of the target inactive uplink component carrier and transmits the sounding reference signal to the base station 2.

Then in Step S83, the base station 2 measures the target inactive uplink component carrier.

Optionally the base station 2 measures the strength of the sounding reference signal transmitted over the target inactive uplink component carrier to generate a measurement result.

Concurrently in Step S81', the base station 2 determines whether a downlink component carrier paired with the target inactive uplink component carrier is in an active status.

If the downlink component carrier paired with the target inactive uplink component carrier is in an inactive status, then in the step S82', the base station 2 transmits a fourth instruction message to the user equipment 1. The fourth instruction message is used for instructing the user equipment 1 to measure the inactive downlink component carrier paired with the target inactive uplink component carrier.

Next in Step S83', the user equipment 1 receives the fourth instruction message from the base station 2, and in response to the fourth instruction message, opens the downlink radio frequency of the inactive downlink component carrier paired with the target inactive uplink component carrier and measures the inactive downlink component carrier.

Since the base station 2 transmits the pilot signal for each configured downlink component carrier, the user equipment 1 can receive the pilot signal transmitted from the base station 2 over the inactive downlink component carrier paired with the target inactive uplink component carrier once the user equipment 1 opens the radio frequency of the inactive downlink component carrier.

Then in Step S84', the user equipment 1 generates a measurement report according to the strength of the pilot signal received over each inactive downlink component carrier paired with the target inactive uplink component carrier and transmits the measurement report to the base station 2.

Optionally the measurement report can include radio conditions of all the downlink component carriers currently in an active status and a radio condition of each inactive downlink component carrier paired with the target inactive uplink component carrier.

Next in Step S85', the base station 2 receives the measurement report from the user equipment 1.

Finally in Step S86, the base station 2 activates one or more pairs of optimal uplink and downlink component carriers based upon the measurement result of the base station 2 and the measurement report received from the user equipment 1.

It shall be noted that Steps S81-S83 and Steps S81'-S86' may not be performed in a specific sequential order.

In the embodiment illustrated in Fig.7, the user equipment 1 requests transmission of the sounding reference signal to the base station 2 and also decides by itself to measure the target inactive downlink component carrier; and in the embodiment illustrated in Fig. 8, the base station 2 controls the user equipment 1 to transmit the sounding reference signal and also controls the user equipment 1 to measure the target inactive downlink component carrier. Those ordinarily skilled in the art can appreciate that the foregoing two solutions can be used in combination in a specific application.

The technical solutions of the invention have been described above from the perspective of method steps, and the technical solutions of the invention will be further described below from the perspective of apparatus modules.

A first control apparatus, in a user equipment of a wireless communication system based on a carrier aggregation technology, of controlling the user equipment to measure an inactive downlink component carrier according to an embodiment of the invention includes: a first measuring unit for, based upon a trigger condition, opening a downlink radio frequency of a target inactive downlink component carrier and measuring the target inactive downlink component carrier; and a first transmitting unit for transmitting a measurement report to a base station.

Optionally the first control apparatus further includes: a second transmitting unit for transmitting a fifth instruction message to the base station, wherein the fifth instruction message is used for instructing the base station to activate one or more inactive downlink component carriers; a first receiving unit for receiving a sixth instruction message from the base station; and a third transmitting unit for, in response to the sixth instruction message, opening an uplink radio frequency of an inactive uplink component carrier paired with the target inactive downlink component carrier and transmitting a sounding reference signal to the base station.

A first control apparatus, in a base station of a wireless communication system based on a carrier aggregation technology, of controlling a user equipment to measure an inactive downlink component carrier according to an embodiment of the invention includes: a fourth transmitting unit for transmitting a first instruction message to the user equipment based upon a trigger condition, wherein the first instruction message is used for instructing the user equipment to measure the target inactive downlink component carrier; a second receiving unit for receiving a measurement report from the user equipment; and a first activating unit for activating one or more optimal downlink component carriers in response to the measurement report.

Optionally the first control apparatus further includes: a first determining unit for determining whether an uplink component carrier paired with the target inactive downlink component carrier is in an active status; a fifth transmitting unit for, if not, transmitting a second instruction message to the user equipment, wherein the second instruction message is used for instructing the user equipment to open an uplink radio frequency of the inactive uplink component carrier paired with the target inactive downlink component carrier and to transmit a sounding reference signal; and a second measuring unit for measuring the inactive uplink component carrier, wherein the first activating unit is further for, based upon the measurement report received from the user equipment and a measurement result of the base station, activating one or more pairs of optimal uplink and downlink component carriers.

A first control assisting apparatus, in a user equipment of a wireless communication system based on a carrier aggregation technology, for assisting a base station in controlling the user equipment to measure an inactive downlink component carrier according to an embodiment of the invention includes: a third receiving unit for receiving a first instruction message from the base station; a third measuring unit for, in response to the first instruction message, opening a downlink radio frequency of a target inactive downlink component carrier and measuring the target inactive downlink component carrier; and a sixth transmitting unit for transmitting a measurement report to the base station.

Optionally the first control assisting apparatus further includes: a fourth receiving unit for receiving a second instruction message from the base station; and a seventh transmitting unit for, in response to the second instruction message, opening an uplink radio frequency of an inactive uplink component carrier paired with the target inactive downlink component carrier and transmitting a sounding reference signal to the base station.

A second control apparatus, in a user equipment of a wireless communication system based on a carrier aggregation technology, for controlling the user equipment to transmit a sounding reference signal according to an embodiment of the invention includes: an eighth transmitting unit for, based upon a trigger condition, transmitting a seventh instruction message to the base station, wherein the seventh instruction message is used for instructing the base station to activate one or more inactive uplink component carriers; a fifth receiving unit for receiving an eighth instruction message from the base station; and a ninth transmitting unit for, in response to the eighth instruction message, opening an uplink radio frequency of a target inactive uplink component carrier and transmitting a sounding reference signal to the base station.

Optionally the second control apparatus further includes: a second determining unit for determining whether a downlink component carrier paired with the target inactive uplink component carrier is in an active status; a fourth measuring unit for, if not, opening a radio frequency of the inactive downlink component carrier paired with the target inactive uplink component carrier and measuring the inactive downlink component carrier; and a tenth transmitting unit for transmitting a measurement report to the base station.

A second control apparatus, in a base station of a wireless communication system based on a carrier aggregation technology, for controlling a user equipment to transmit a sounding reference signal according to an embodiment of the invention includes: an eleventh transmitting unit for, based upon a trigger condition, transmitting a third instruction message to the user equipment, wherein the third instruction message is used for instructing the user equipment to open an uplink radio frequency of a target inactive uplink component carrier and to transmit a sounding reference signal; a fifth measuring unit for measuring the target inactive uplink component carrier; and a second activating unit for activating one or more optimal uplink component carriers in response to the measurement result.

Optionally the second control apparatus further includes: a third determining unit for determining whether a downlink component carrier paired with the target inactive uplink component carrier is in an active status; a twelfth unit for, if not, transmitting a fourth instruction message to the user equipment, wherein the fourth instruction message is used for instructing the user equipment to measure the inactive downlink component carrier paired with the target inactive uplink component carrier; and a sixth receiving unit for receiving a measurement report from the user equipment, wherein the second activating unit is further for, based upon the measurement report received from the user equipment and a measurement result of the base station, activating one or more pairs of optimal uplink and downlink component carriers.

An second control assisting apparatus, in a user equipment of a wireless communication system based on a carrier aggregation technology, for assisting a base station in controlling the user equipment to transmit a sounding reference signal according to an embodiment of the invention includes: a seventh receiving unit for receiving a third instruction message from the base station; and a twelfth transmitting unit for, in response to the third instruction message, opening an uplink radio frequency of a target inactive uplink component carrier and transmitting the sounding reference signal to the base station.

Optionally the second control assisting apparatus further includes: an eighth receiving unit for receiving a fourth instruction message from the base station; a sixth measuring unit for, in response to the fourth instruction message, opening a downlink radio frequency of an inactive downlink component carrier paired with the target inactive uplink component carrier and measuring the target inactive uplink component carrier; and a thirteenth transmitting unit for transmitting a measurement report to the base station.

Although the invention has been elucidated and described in details above in the drawings and the foregoing description, the elucidation and the description shall be taken as exemplary and illustrative but not limitative, and the invention shall not be limited to the foregoing embodiments.

Those ordinarily skilled in the art can appreciate and make other modifications to the disclosed embodiments upon examination of the description, the disclosure, the drawings and the appended claims. In the claims, the term "comprises/comprising" will not preclude another element(s) and/or step(s), and the term "a/an" will not preclude plural. In a practical application of the invention, a component may perform functions of a plurality of technical features as referred to in a claim. Any reference numerals in the claims shall not be construed as limiting the scope of the invention.

## Claims

1. A method, in a network device of a wireless communication system based on a carrier aggregation technology, of controlling a user equipment to measure an inactive downlink component carrier, the method comprising the step of:
a. based upon a trigger condition, controlling the user equipment to open a downlink radio frequency of a target inactive downlink component carrier and to measure the target inactive downlink component carrier.

2. The method according to claim 1, wherein the network device is the user equipment, and the step a comprises the steps of:
m. based upon the trigger condition, opening the downlink radio frequency of the target inactive downlink component carrier and measuring the target inactive downlink component carrier; and
n. transmitting a measurement report to a base station.

3. The method according to claim 2, the method further comprising the steps of:
- transmitting a fifth instruction message to the base station, wherein the fifth instruction message is used for instructing the base station to activate one or more inactive downlink component carriers; and
- receiving a sixth instruction message from the base station, and according to the sixth instruction message, opening an uplink radio frequency of an inactive uplink component carrier paired with the target inactive downlink component carrier and transmitting a sounding reference signal to the base station.

4. The method according to claim 1, wherein the network device is a base station, and the step a comprises the steps of:
M. based upon the trigger condition, transmitting a first instruction message to the user equipment, wherein the first instruction message is used for instructing the user equipment to measure the target inactive downlink component carrier;
N. receiving a measurement report from the user equipment; and
O. activating one or more optimal downlink component carriers according to the measurement report.

5. The method according to claim 4, wherein before the step O, the method further comprising the steps of:
- determining whether an uplink component carrier paired with the target inactive downlink component carrier is in an active status;
- if not, transmitting a second instruction message to the user equipment, wherein the second instruction message is used for instructing the user equipment to open an uplink radio frequency of the inactive uplink component carrier paired with the target inactive downlink component carrier and to transmit a sounding reference signal; and
- measuring the inactive uplink component carrier,
wherein the step O further comprises the step of: according to the measurement report received from the user equipment and a measurement result of the base station, activating one or more pairs of optimal uplink and downlink component carriers.

6. A method, in a user equipment of a wireless communication system based on a carrier aggregation technology, of assisting a base station in controlling the user equipment to measure an inactive downlink component carrier, the method comprising the steps of:
I. receiving a first instruction message from the base station;
II. according to the first instruction message, opening a downlink radio frequency of a target inactive downlink component carrier and measuring the target inactive downlink component carrier; and
III. transmitting a measurement report to the base station.

7. The method according to claim 6, the method further comprising the steps of:
X. receiving a second instruction message from the base station; and
Y according to the second instruction message, opening an uplink radio frequency of an inactive uplink component carrier paired with the target inactive downlink component carrier and transmitting a sounding reference signal to the base station.

8. A method, in a network device of a wireless communication system based on a carrier aggregation technology, of controlling a user equipment to transmit a sounding reference signal, the method comprises the step of:
i. based upon a trigger condition, controlling the user equipment to open an uplink radio frequency of a target inactive uplink component carrier and to transmit the sounding reference signal to a base station.

9. The method according to claim 8, wherein the network device is the user equipment, and the step i further comprises the steps of:
e. based upon the trigger condition, transmitting a seventh instruction message to the base station, wherein the seventh instruction message is used for instructing the base station to activate one or more inactive uplink component carriers; and
f. receiving an eighth instruction message from the base station, and according to the eighth instruction message, opening the uplink radio frequency of the target inactive uplink component carrier and transmitting the sounding reference signal to the base station.

10. The method according to claim 9, the method further comprising the steps of:
- determining whether a downlink component carrier paired with the target inactive uplink component carrier is in an active status;
- if not, opening a radio frequency of the inactive downlink component carrier paired with the target inactive uplink component carrier and measuring the inactive downlink component carrier; and
- transmitting a measurement report to the base station.

11. The method according to claim 8, wherein the network device is the base station, and the step i further comprises the steps of:
E. based upon the trigger condition, transmitting a third instruction message to the user equipment, wherein the third instruction message is used for instructing the user equipment to open the uplink radio frequency of the target inactive uplink component carrier and to transmit the sounding reference signal;
F. measuring the target inactive uplink component carrier; and
G. activating one or more optimal uplink component carriers according to a measurement result.

12. The method according to claim 11, wherein before the step G, the method further comprising the steps of:
- determining whether a downlink component carrier paired with the target inactive uplink component carrier is in an active status;
- if not, transmitting a fourth instruction message to the user equipment, wherein the fourth instruction message is used for instructing the user equipment to measure the inactive downlink component carrier paired with the target inactive uplink component carrier; and
- receiving the measurement report from the user equipment,
wherein the step G further comprises the step of:
according to the measurement report received from the user equipment and the measurement result of the base station, activating one or more pairs of optimal uplink and downlink component carriers.

13. A method, in a user equipment of a wireless communication system based on a carrier aggregation technology, of assisting a base station in controlling the user equipment to transmit a sounding reference signal, the method comprising the steps of:
A. receiving a third instruction message from the base station; and
B. according to the third instruction message, opening an uplink radio frequency of a target inactive uplink component carrier and transmitting the sounding reference signal to the base station.

14. A first control apparatus, in a network device of a wireless communication system based upon a carrier aggregation technology, for controlling a user equipment to measure an inactive downlink component carrier, wherein the first control apparatus is configured to control, based upon a trigger condition, the user equipment to open a downlink radio frequency of a target inactive downlink component carrier and to measure the target inactive downlink component carrier, and wherein the network device is a base station or the user equipment.

15. A second control apparatus, in a network device of a wireless communication system based upon a carrier aggregation technology, for controlling a user equipment to transmit a sounding reference signal, wherein the second control apparatus is configured to control, based upon a trigger condition, the user equipment to open an uplink radio frequency of a target inactive uplink component carrier and to transmit a sounding reference signal to a base station, and wherein the network device is the base station or the user equipment.
